# EUROPÄISCHE PATENTSCHRIFT

(11) **EP 1 785 763 B1**
(45) Veröffentlichungstag und Bekanntmachung des Hinweises auf die Patenterteilung: **21.07.2010**
(21) Anmeldenummer: 05110657.3
(22) Anmeldetag: 11.11.2005
(51) Int. Cl.: G02C 5/16, G02C 5/00

(54) **Brillenbügel und Brille mit einem solchen Brillenbügel**
Temple for spectacles, and spectacles comprising such a temple
Branche de lunettes, et lunettes comprenant une telle branche

(43) Veröffentlichungstag der Anmeldung: 16.05.2007
(73) Patentinhaber: SdS InvestCorp AG, 6300 Zug (CH)
(72) Erfinder: Dudli, Markus, 9500 Wil (CH); Kaufmann, Sandra, 8003 Zurich (CH); Radosavljevic, Marko, 8092 Zurich (CH); Sporri, Guy, 8092 Zurich (CH); Wirth, Othmar, 9230 Flawil (CH); Henne, Dr. Markus, 8640 Rapperswil (CH); Hugentobler, Daniel, 8092 Zurich (CH)
(74) Vertreter: Kley, Hansjörg

(56) Entgegenhaltungen:
- WO-A1-2005/116727
- DE-B- 1 267 876
- FR-E- 92 044
- US-A- 2 795 233

## Beschreibung

Die Anmeldung betrifft einen Brillenbügel und eine Brille mit einem Brillenbügel gemäss den unabhängigen Patentansprüchen.

Bei herkömmlichen Brillen werden die Brillenbügel zum Zusammenlegen der Brille eingeklappt. Da sowohl die Gläser als auch die Bügel nach aussen gekrümmt sind, nimmt die Brille im zusammengelegten Zustand relativ viel Platz ein. Aus WO 2005/059631 ist eine flach zusammenlegbare Brille mit einem Kugelgelenk bekannt. Die Bügel haben ungefähr die gleiche Krümmung wie die Brillenfront und werden vor die Gläser gefaltet. Damit ist die Brille im zusammengelegten Zustand unwesentlich dicker als die Brillengläser selbst und nimmt sehr wenig Platz ein. Nachteilig an dieser Brille ist, dass das Kugelgelenk relativ aufwändig und daher kostspielig herzustellen ist.

DE12 67 876 B offenbart einen Brillenbügel, der eine erste Stellung und eine zweite Stellung aufweist, wobei die Krümmung des Bügels in der ersten Stellung etwa der Krümmung in der zweiten Stellung entgegengesetzt ist, und wobei der Bügel zwischen den beiden Stellungen umschnappbar ist. FR 92 044 E offenbart einen ähnlichen Brillenbügel.

WO 2005/116727 ist Teil des Stands der Technik nach Artikel 54(3) EPÜ und offenbart eine Brille, die einen Brillenbügel mit einem Gelenk aufweist. Das Gelenk besteht aus zwei Streifen, die auf ihrer inneren Seite länger sind als auf ihrer äusseren Seite, so dass sie sich aus der Ebene, die durch den Brillenbügel gebildet wird herausbiegen. Das Gelenk ist dadurch zwischen zwei Stellungen umschnappbar.

Es ist daher Aufgabe der vorliegenden Erfindung, die Nachteile des Bekannten zu überwinden und insbesondere eine Brille zu schaffen, welche einfach und kostengünstig herstellbar ist und dennoch äusserst flach zusammenlegbar ist.

Diese Aufgabe wird gelöst durch einen Brillenbügel und eine Brille für den Brillenbügel gemäss den unabhängigen Patentansprüchen.

Der Brillenbügel weist eine erste Stellung und eine zweite Stellung auf. Dabei ist die Krümmung des Bügels in der ersten Stellung etwa der Krümmung des Bügels in der zweiten Stellung entgegengesetzt. Hierbei ist insbesondere die Krümmung des Bügels im Bereich zwischen der Befestigung des Bügels an der Brille und dem Ende des Bügels, welches hinter dem Ohr zu liegen kommt, gemeint. Durch diese Krümmung passt sich der Brillenbügel der Kopfform des Trägers an.

Der Bügel ist erfindungsgemäss zwischen den beiden Stellungen umschnappbar. Umschnappen bedeutet in diesem Zusammenhang, dass keine Rotation des Bügels notwendig ist, um den Bügel von der ersten in die zweite Stellung zu bewegen. Die beiden Stellungen des Bügels sind stabil, während des Umschnappens befindet sich der Bügel aber kurzzeitig in einer instabilen Lage.

Wenn der Bügel an einer Brille befestigt ist, entspricht die erste Stellung des Bügels einer Tragestellung, die zweite Stellung des Bügels einer Einklappstellung. Der Bügel kann also mit einem herkömmlichen Klappgelenk an der Brille befestigt werden. In der Tragestellung weist der Bügel eine konvexe Krümmung auf, welche sich der Kopfform des Trägers angleicht. In der Einklappstellung ist der Bügel konkav gegen die Innenseite der Brille gekrümmt und schmiegt sich beim Einklappen an die Innenseite der Gläser an.

Solch ein Bügel ist stabil, einfach herstellbar und kann auf herkömmliche Weise am Brillengestell befestigt werden. Die Handhabung der Brille ist sehr einfach und unterscheidet sich kaum von einer konventionellen Brille. Dennoch wird mit solch einem Bügel erreicht, dass die Brille äusserst flach zusammengelegt werden kann.

Vorteilhaft weist der Bügel Federstahlblech auf. Besonders geeignet hat sich dabei die Verwendung von Federstahlblech mit einer Dicke von 0.2 bis 0.5 mm erwiesen. Bügel aus einem geeigneten Kunststoff sind aber ebenfalls denkbar.

In einer besonders bevorzugten Ausführungsform ist der Bügel aus einem Rohling aus federndem Material erhältlich. Der Rohling weist zwei V-förmig von einem Verbindungspunkt aus voneinander laufende Schenkel auf. Die Schenkel können aus Metall, insbesondere Federstahlblech, gefertigt sein. Ein geeigneter stabiler Kunststoff kann ebenfalls geeignet sein.

Die beiden Schenkel des V haben einen vorgegebenen Öffnungswinkel zueinander und weisen eine vorgegebne Krümmung auf. Am offenen Ende sind die Schenkel des V miteinander verbunden oder verbindbar. In der Ebene des V ist der Rohling flach, solange die Schenkel am offenen Ende nicht verbunden sind. Die Schenkel werden am offenen Ende derart verbunden, dass die Schenkel verformt sind und typischerweise parallel zueinander verlaufen. Die Verbindung kann dabei aus einem Verbindungsglied bestehen. Eine Lötverbindung ist ebenfalls denkbar. Durch das Verbinden der offenen Enden befinden sich die Schenkel unter einer Spannung und werden in eine gekrümmte Lage aus der Ebene des V gezwängt. Dabei können zwei stabile Lagen mit entgegengesetzten Krümmungen eingenommen werden, zwischen welchen der Bügel umschnappbar ist.

Die Schenkel weisen typischer Weise einen Krümmungsradius von mehr als 400 mm auf. Insbesondere kann der Krümmungsradius auch unendlich sein, d.h. die Schenkel können gerade sein.

Der Öffnungswinkel zwischen den Schenkeln befindet sich üblicherweise im Bereich von 0 bis 8°. Je stärker die Schenkel gekrümmt sind, desto kleinere Öffnungswinkel sind notwendig, um eine Spannung aufzubauen. Umgekehrt ist bei schwach oder gar nicht gekrümmten Schenkeln ein grösserer Öffnungswinkel notwendig, damit das gewünschte Verhalten des Bügels eintritt.

In einer besonders vorteilhaften Ausführungsform sind die Schenkel am offenen Ende in einem Klappgelenk für eine Brille verbunden. Somit wird kein zusätzliches Verbindungsglied benötigt, um die Schenkel zu verbinden. Dies ist nicht nur von ästhetischer Sicht her vorteilhaft, sondern ermöglicht eine einfachere und somit kostengünstigere Herstellung, da ein Schritt im Herstellungsverfahren eingespart werden kann.

Alternativ kann der Bügel eine flächige, etwa rechteckige oder ovale Struktur mit einer Länge und einer Breite aus federndem Material aufweisen. Die Struktur wird durch zwei beidseitig verbundene Schenkel gebildet und ist um die zwei Achsen je parallel zur Längs- und Breitrichtung der Struktur gekrümmt und wird dadurch unter Vorspannung gebracht. Durch Umschnappen lässt sich die Krümmung des Rohlings umdrehen. Auch ein solcher Bügel weist also zwei stabile Stellungen auf.

Es ist möglich, den Bügel mit einem flexiblen Kunststoff zu beschichten. Dazu eignen sich insbesondere Silikonbeschichtungen. Mit solch einer Beschichtung kann die Oberfläche des Bügels beliebig gestaltet werden. Ausserdem bietet eine weiche Beschichtung einen Schutz für den Träger und die Brillengläser.

Alternativ oder zusätzlich kann zwischen den Schenkeln eines Rohlings ein flexibler Kunststoff, insbesondere Silikon, eingelassen sein. Eine solche Einlage schützt nicht nur die Gläser und den Träger, sondern stabilisiert die beiden Schenkel zusätzlich gegeneinander. Insbesondere ist es mit dem Kunststoff möglich, den Verlauf des Abstands zwischen den beiden Schenkeln zu formen. Dadurch wird indirekt der Krümmungsverlauf des Bügels mitgeformt. Beispielsweise wird die Krümmung des Bügels stärker, wenn die Schenkel am offenen Ende unter einem grösseren Winkel miteinander verbunden werden und somit weniger genau parallel verlaufen.

Gegenstand der Erfindung ist weiter eine Brille, welche einen oben beschriebenen Brillenbügel aufweist. Dabei ist es sinnvoll, wenn die erste Stellung des Bügels einer Tragestellung der Brille und die zweite Stellung des Bügels einer Einklappstellung der Brille entspricht. Es ist aber nicht zwingend notwendig, den Bügel zum Zusammenklappen der Brille umschnappen zu lassen. Die Brille kann auch wie eine herkömmliche Brille zusammengelegt werden und hat dann denselben Platzbedarf. Im Gegensatz zu herkömmlichen Brillen können die Bügel aber zusätzlich umgeschnappt werden und die Brille kann äusserst platzsparend verstaut werden.

Ein Rohling für einen Brillenbügel wie oben beschrieben ist insbesondere ein etwa V-förmiger Rohling aus einem federnden Material, insbesondere Federstahlblech, wobei die offenen Enden des Rohlings nicht miteinander verbunden sein müssen. Der Rohling kann aus einstückig aus dem Blech zugeschnitten sein. Die Schenkel des V laufen von einem Verbindungspunkt aus auseinander, wobei der Öffnungswinkel zwischen den Schenkeln und die Krümmung der Schenkel vorgegeben ist. Der Rohling kann als Präzisionsteil hergestellt werden, welches beispielsweise mit einem Laser oder einem Wasserstrahl geschnitten wurde.

In einer alternativen Ausführungsform weist der Rohling zwei beidseitig verbundene Schenkel auf, welche eine flächige, etwa rechteckige oder ovale Struktur mit einer Länge und einer Breite bilden. Weiter ist Rohling um zwei Achsen, welche je parallel zur Längs- und Breitrichtung der Struktur liegen, gekrümmt und wird dadurch unter Vorspannung gebracht.

Im folgenden ist die Erfindung anhand von Ausführungsbeispielen mit Bildern näher erläutert. Es zeigt:
- Fig. 1a-b:: verschiedene mögliche Rohlinge für einen erfindungsgemässen Brillenbügel,
- Fig. 2a-c:: einen Rohling gemäss Fig. 1b mit verbundenen Schenkeln am offenen Ende,
- Fig. 3a-c:: das schrittweise Zusammenklappen einer erfindungsgemässen Brille, Fig. 4a-b: mögliche Formen einer Kunststoffbeschichtung, und
- Fig. 5a-c:: einen alternativen Rohling in verschiedenen Ansichten.

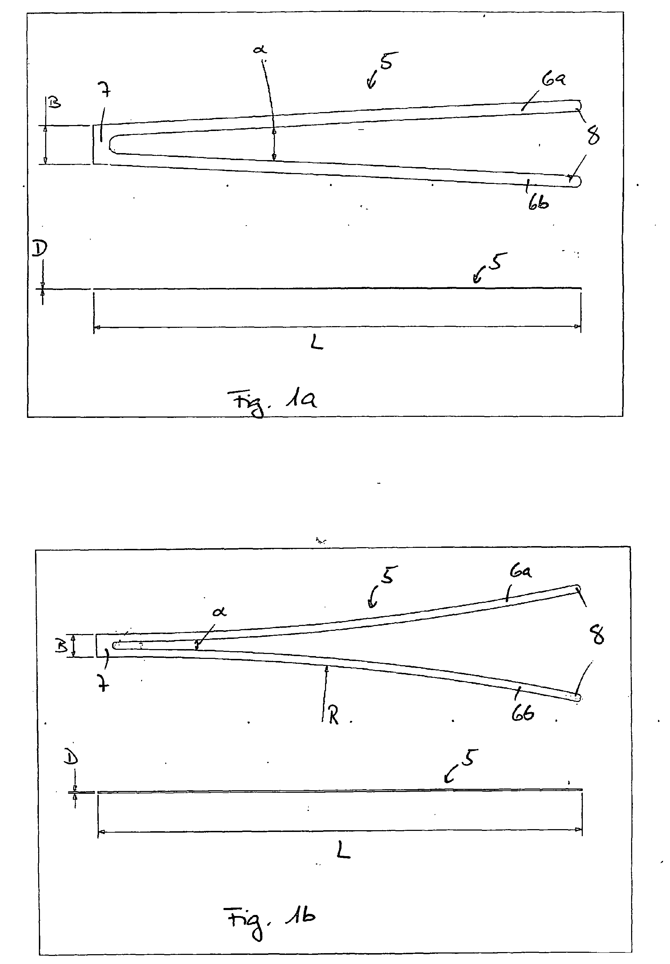

Zwei verschiedene Rohlinge 5 für einen erfindungsgemässen Brillenbügel 2 sind in Fig. 1a und 1b dargestellt. Der Rohling 5 ist jeweils in Draufsicht und in Seitenansicht dargestellt. Beide Rohlinge 5 sind aus Federstahlblech gefertigt und V-förmig zugeschnitten.

Beim Rohling 5 aus Fig. 1a sind die beiden Schenkel 6a und 6b des V nicht gekrümmt. Dies entspricht einem unendlichen Krümmungsradius R. Der Öffnungswinkel α beträgt in diesem Beispiel 3°. Die Breite B des geschlossenen Endes 7 ist 6 mm. Die Dicke D des Federstahls ist 0.2 mm. Die Länge L des Rohlings 5 ist 120 mm.

Wenn die beiden Schenkel 6a und 6b am offenen Ende 8 etwa in einer parallelen Lage zueinander miteinander verbunden werden, wird eine Spannung aufgebaut. Die Schenkel 6a und 6b werden dann bezogen auf die Ebene in eine gekrümmte Position gezwängt, wobei beide Auslenkungen etwa gleichwertig sind. In diesen gekrümmten Stellungen befindet sich der Rohling 5 in einer stabilen Lage. Für den Rohling 5 aus Fig. 1a beträgt der resultierende Krümmungsradius ca. 167 mm.

Der Rohling 5 aus Fig. 1b hat gekrümmte Schenkel 6a und 6b. Der Krümmungsradius R ist in diesem Fall 550 mm. Der Öffnungswinkel α beträgt 0°. Das Auseinanderlaufen der beiden Schenkel wird also allein durch die Krümmung der Schenkel 6a und 6b verursacht. Die Dicke D des Federstahls beträgt bei diesem Rohling 0.3 mm. Die Länge L des Rohlings 5 ist 121 mm. Am offenen Ende 7 hat der Rohling 5 eine Breite B von 10 mm. Wenn die beiden Schenkel 6a und 6b unter Vorspannung miteinander verbunden werden, beträgt der resultierende Krümmungsradius des Rohlings 5 ca. 197 mm.

Verschiedene Werte für den Öffnungswinkel a, den Krümmungsradius R und die Dicke D des Federstahls können einfach experimentell bestimmt werden. Der Krümmungsradius lässt sich des weiteren variieren, indem der Abstand der Schenkel im gekrümmten Zustand variiert wird.

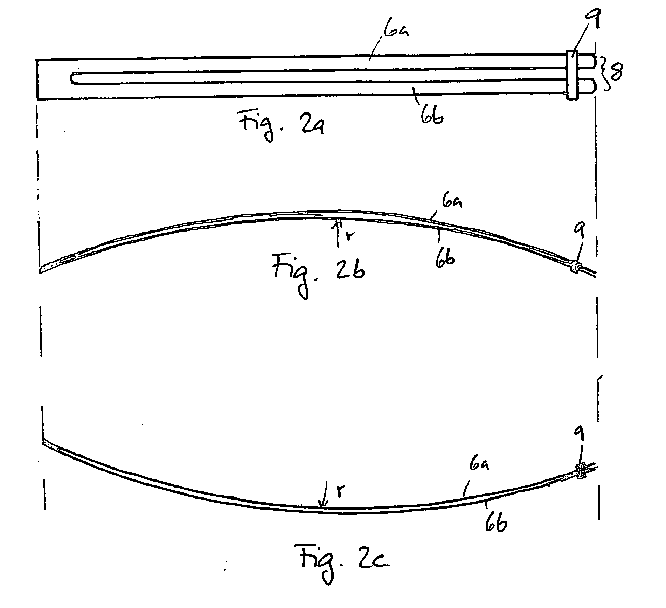

In Fig. 2a-c ist der Rohling 5 aus Fig. 1b gezeigt, wobei die Schenkel 6a und 6b am offenen Ende 8 mit einem Verbindungsglied 9 verbunden wurden. Wie in der Draufsicht aus Fig. 2a erkennbar, werden die Schenkel 6a und 6b durch das Verbinden in eine Lage parallel zueinander gezwängt. Dabei werden die Schenkel relativ zur Zeichnungsebene entweder gegen oben oder gegen unten gekrümmt.

In Fig. 2b und 2c ist der Rohling in beiden Stellungen in Seitenansicht dargestellt. Dabei ist die resultierende Krümmung r sichtbar, in welcher sich der Rohling 5 in einer stabilen Stellung befindet. Die Auslenkung des Rohlings 5 kann in zwei Richtungen erfolgen, die Krümmung r bleibt dabei aber in etwa gleich.

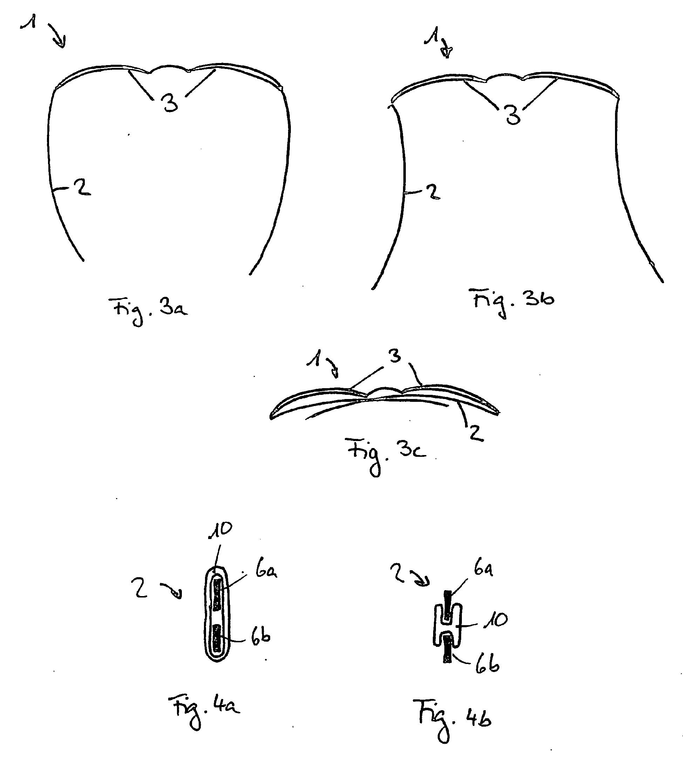

Der Zusammenklappvorgang für eine erfindungsgemässe Brille 1 ist in Fig. 3a-3c dargestellt. Die Brille besteht aus einer Fassung 4, in welcher Gläser 3 eingefasst sind, und aus Bügeln 2. Die Bügel 2 weisen einen Krümmungsradius r auf, welcher der Krümmung r' der Gläser 3 und der Fassung 4 in etwa entspricht.

In Fig. 3a befindet sich die Brille 1 in einer Tragestellung. Die Bügel 2 sind konvex nach aussen gekrümmt und erlauben dem Träger somit ein bequemes Tragen der Brille 1.

Zum Zusammenklappen der Brille 1 werden die Bügel 2 in die zweite Stellung umgeschnappt. Die zweite Stellung der Bügel 2 ist aus Fig. 3b ersichtlich. Die Bügel 2 sind nun konkav gegen innen gebogen. Da die Bügel 2 an sich umschnappbar sind, wird für diesen Schritt kein Gelenk benötigt. Der Krümmungsradius r der Bügel wird durch das Umschnappen nicht verändert, nur die Richtung der Krümmung ist umgekehrt.

In Fig. 3c ist die fertig zusammengeklappte Brille 1 dargestellt. Die Bügel 2 werden in der Zusammenklappstellung wie bei einer herkömmlichen Brille 1 eingeschwenkt. Da die Bügel 2 in die Zusammenklappstellung umgeschnappt wurden, ist die Krümmung der Bügel 2 ungefähr parallel zur Krümmung der Brillengläser 3. Somit ist die Brille 1 äusserst flach zusammengelegt und kann platzsparend verstaut werden.

Alternativ zum Ablauf wie in Fig. 3a bis 3c dargestellt können die Bügel auch erst umgeschnappt werden, nachdem sie eingeklappt wurden. Am Ende sind ist die Brille genau gleich zusammengelegt und benötigt nicht mehr Platz.

In Fig. 4a und 4b sind zwei mögliche Bügel 2 im Querschnitt gezeigt. In Fig. 4a sind die Schenkel 6a und 6b in Silikon 10 eingehüllt. Das Silikon 10 kann beliebige Farben oder Muster aufweisen. Auch transparente Hüllen, welche den Blick auf die beiden Schenkel 6a und 6b erlauben, sind denkbar.

In Fig. 4b wurde zwischen die beiden Schenkel 6a und 6b Silikon 10 eingelassen. Damit ist der Abstand der beiden Schenkel 6a und 6b fixiert. Ebenfalls denkbar ist auch, dass das Silikon 10 sowohl zwischen als auch um die Schenkel 6a und 6b gebracht wird, was einer Kombination der beiden in Fig. 4a und 4b dargestellten Möglichkeiten entspricht.

In jedem Fall schützt das Silikon 10 die beiden Schenkel 6a und 6b gegen Verformungen und Beschädigungen. Andererseits werden die Gläser 3 gegen Kratzer durch das Federstahlblech geschützt. Ausserdem ist das Silikon 10 optisch beliebig gestaltbar.

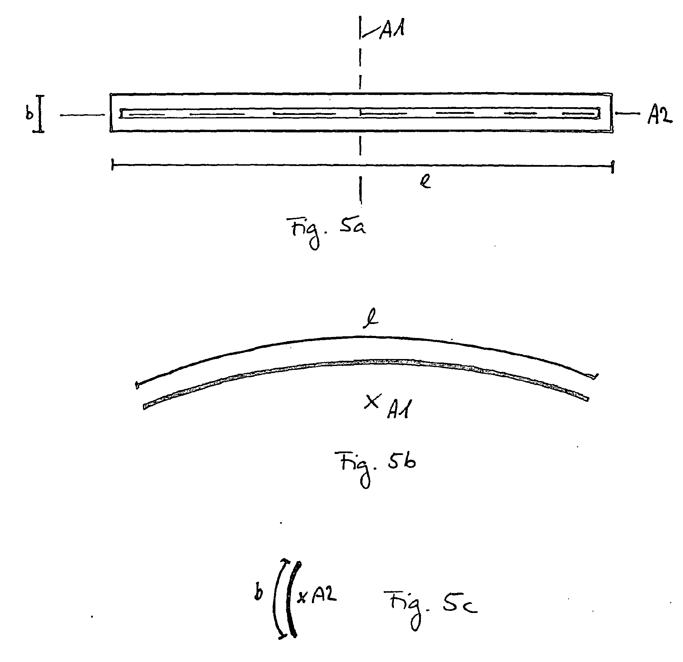

In Fig. 5a-c ist ein alternativer Rohling 15 dargestellt, welcher einen Brillenbügel bildet. Der Rohling 15 weist zwei Schenkel 16a und 16b auf, welche beidseitig miteinander verbunden sind. Dieser Rohling weist eine rechteckförmige Struktur auf, wie aus Fig. 5a erkenntlich ist. Die rechteckförmige Struktur hat eine Länge 1 und eine Breite b. Alternativ können die Schenkel 16a und 16b derart miteinander verbunden sein, dass der Rohling 15 eine ovale Struktur hat.

Damit der Rohling 15 die erwünschten Krümmungseigenschaften aufweist, wird er um zwei Achsen A1 und A2 gekrümmt. Die Achse A1 ist parallel zur Breitrichtung des Rohlings 15, die Achse A2 parallel zur Längsrichtung des Rohlings 15. Das bedeutet, dass der Rohling 15 entlang der Längsrichtung um die Achse A1 mit dem Krümmungsradius r1 gekrümmt wird, und entlang der Breitrichtung um die Achse A2 mit dem Krümmungsradius r2. Durch die Krümmungen r1 und r2 befindet sich der Rohling 15 unter Spannung. Wenn der Rohling durchgedrückt wird, wird er analog zum Bügel 2 aus Fig. 2a-c umgeschnappt. Rohling 15 weist also zwei stabile Lagen auf, wobei beide Krümmungen r1 und r2 des Rohlings 15 in den beiden Lagen einander entgegengesetzt ist.

In Fig. 5b ist der Rohling 15 in einer Seitenansicht dargestellt, so dass die Längsrichtung des Rohlings 15 sichtbar ist. Die beiden Schenkel 16a und 16b sind um die Achse A1 mit dem Krümmungsradius r1 gekrümmt. In dieser Darstellung verläuft die Krümmung r1 nach oben. Der Rohling 15 kann jedoch auch derart durchgedrückt werden, dass die Krümmung r1 nach unten verläuft. Die Krümmung r1 des Rohlings 15 kann also umgeschnappt werden, ohne dass eine Rotation des Rohlings 15 notwendig wäre.

In Fig. 5c ist der Rohling 15 in einer weiteren Seitenansicht dargestellt, wobei die Breitrichtung des Rohlings 15 sichtbar ist. Der Rohling 15 ist zusätzlich um die Achse A2 mit Krümmungsradius r2 gekrümmt. Wenn der Rohling 15 umgeschnappt wird, dreht sich auch die Krümmung r2 um.

## Patentansprüche

1. Brillenbügel (2) für eine Brille, welcher Bügel (2) eine erste Stellung und eine zweite stellung aufweist, wobei die Krümmung (r) des Bügels (2) in der ersten Stellung etwa der Krümmung (r) des Bügels (2) in der zweiten Stellung entgegengesetzt ist und wobei der Bügel (2) zwischen den beiden Stellungen umschnappbar ist, **dadurch gekennzeichnet, dass** der Bügel (2) eine flächige etwa rechteckige oder ovale Struktur mit einer Länge (1) und einer Breite (b) aus federndem Material aufweist, welche aus zwei beidseitig verbundenen schenkeln (16a, 16b) gebildet wird, wobei die Struktur um zwei Achsen (A1, A2) parallel zur Längs- und Breitrichtung der Struktur gekrümmt und **dadurch** unter Vorspannung gebracht ist.

2. Brillenbügel (2) für eine Brille, welcher Bügel (2) eine erste Stellung und eine zweite Stellung aufweist, wobei die Krümmung (r) des Bügels (2) in der ersten Stellung etwa der Krümmung (r) des Bügels (2) in der zweiten Stellung entgegengesetzt ist und wobei der Bügel (2) zwischen den beiden Stellungen umschnappbar ist, **dadurch gekennzeichnet, dass** der Bügel (2) aus einem Rohling (5) aus federndem Material erhältlich ist, welcher zwei V-förmig von einem Verbindungspunkt (7) aus voneinander laufende Schenkel (6a, 6b) aufweist, wobei die beiden Schenkel (6a, 6b) einen vorgegebenen Öffnungswinkel (α) voneinander und eine vorgegebne Krümmung (R) aufweisen und am offenen Ende (8) so miteinander verbunden sind, dass sich die Schenkel (6a, 6b) unter einer Spannung befinden und in eine gekrümmte Lage aus der Ebene des V gezwängt werden.

3. Brillenbügel (2) nach Anspruch 1 oder 2, **dadurch gekennzeichnet, dass** der Bügel (2) aus Metall, insbesondere Aluminium oder Federstahlblech, vorzugsweise mit einer Dicke von 0-2 bis 0.5 mm, besteht.

4. Brillenbügel (2) nach Anspruch, 2 oder 3 wenn von Anspruch 2 abhängig, **dadurch gekennzeichnet, dass** die Schenkel (6a, 6b) des Rohlings (5) einen Krümmungsradius (R) von mehr als 400 mm aufweisen.

5. Brillenbügel (2) nach einem der Ansprüche 2, oder 3 oder 4 wenn von Anspruch 2 abhängig **dadurch gekennzeichnet, dass** die Schenkel (6a, 6b) des Rohlings (5) einen Öffnungswinkel (α) im Bereich von 0 bis 8° aufweisen.

6. Brillenbügel (2) nach einem der Ansprüche 2, oder 3 bis 5 wenn von Anspruch 2 abhängig **dadurch gekennzeichnet, dass** die Schenkel (6a, 6b) des Rohlings (5) am offenen Ende (8) in einem Klappgelenk für eine Brille (1) verbunden sind.

7. Brillenbügel (2) nach einem der Ansprüche 1 bis 6, **dadurch gekennzeichnet, dass** der Bügel (2) mit einem flexiblen Kunststoff, insbesondere Silikon (10), beschichtet ist.

8. Brillenbügel (2) nach einem der Ansprüche 1 bis 7, **dadurch gekennzeichnet, dass** zwischen den Schenkeln (6a, 6b; 16a, 16b) ein flexibler Kunststoff, insbesondere Silikon (10), eingelassen ist.

9. Brille (1), wobei die Brille Bügel (2) gemäss einem der Ansprüche 1 bis 8 aufweist.

10. Brille (1) nach Anspruch 9, wobei die erste Stellung des Bügels einer Tragestellung der Brille (1) und die zweite Stellung des Bügels einer Eirlklappstellung der Brille (1) entspricht und die Krümmung (r) der Bügel (2) ungefähr gleich der Krümmung (r') des Rahmens(4) ist.

## Claims

1. Temple (2) for spectacles, which temple (2) has a first position and a second position, with the curvature (r) of the temple (2) in the first position approximately opposing the curvature (r) of the temple (2) in the second position and with the temple (2) being able to be snapped between the two positions, **characterised in that** the temple (2) has a planar, approximately rectangular or oval structure with a length (1) and a width (b) made of resilient material, which is formed from two limbs (16a, 16b) connected on both sides, with the structure being curved about two axes (A1, A2) parallel to the longitudinal and width direction of the structure and as a result being pretensioned.

2. Temple (2) for spectacles, which temple (2) has a first position and a second position, with the curvature (r) of the temple (2) in the first position approximately opposing the curvature (r) of the temple (2) in the second position and with the temple (2) being able to be snapped between the two positions, **characterised in that** the temple (2) can be obtained from a blank (5) made of resilient material, which has two limbs (6a, 6b) proceeding away from one another in a V-shape from a connecting point (7), with the two limbs (6a, 6b) having a predetermined opening angle (α) from one another and a predetermined curvature (r) and being connected to one another at the open end (8) such that the limbs (6a, 6b) are tensioned and are forced into a curved position out of the plane of the V.

3. Temple (2) according to claim 1 or 2, **characterized in that** the temple (2) is made of metal, in particular aluminium or spring sheet steel, preferably with a thickness of 0.2 to 0.5mm.

4. Temple (2) according to claim 2 or 3, if dependent on claim 2, **characterized in that** the limbs (6a, 6b) of the blank (5) have a curvature radius (r) of more than 400 mm.

5. Temple (2) according to one of claims 2 or 3 or 4, if dependent on claim 2, **characterized in that** the limbs (6a, 6b) of the blank (5) have an opening angle (α) in the range of 0 to 8°.

6. Temple (2) according to one of claims 2 or 3 to 5, if dependent on claim 2, **characterized in that** the limbs (6a, 6b) of the blank (5) are connected at the open end (8) in a folding joint for spectacles (1).

7. Temple (2) according to one of claims 1 to 6, **characterized in that** the temple (2) is coated with a flexible plastic, in particular silicone (10).

8. Temple (2) according to one of claims 1 to 7, **characterized in that** a flexible plastic, in particular silicone (10), is embedded between the limbs (6a, 6b; 16a, 16b).

9. Spectacles (1), with the spectacles (2) having a temple (2) according to one of claims 1 to 8.

10. Spectacles (1) according to claim 9, with the first position of the temple corresponding to a wearing position of the spectacles (1) and the second position of the temple corresponding to a folding position of the spectacles (1) and the curvature (r) of the temple (2) approximately equating to the curvature (r') of the frame (4).

## Revendications

1. Branche ( 2 ) de lunettes, qui a une première position et une deuxième position, la courbure ( r ) de la branche ( 2 ), dans la première position, étant à peu près opposée à la courbure ( r ) de la branche ( 2 ) dans la deuxième position et la branche ( 2 ) pouvant sauter brusquement entre les deux positions, **caractérisée en ce que** la branche ( 2 ) a une structure plate, à peu près rectangulaire ou ovale, ayant une longueur ( 1 ) et une largeur ( b ), en un matériau élastique, qui est formée de deux ailes ( 16a, 16b ) reliées des deux côtés, la structure étant courbée autour de deux axes ( A1, A2 ) parallèlement à la direction longitudinale et à la direction en largeur de la structure et étant ainsi mise sous précontrainte.

2. Branche ( 2 ) de lunettes, qui a une première position et une deuxième position, la courbure ( r ) de la branche ( 2 ) dans la première position étant à peu près opposée à la courbure ( r ) de la branche ( 2 ) dans la deuxième position et la branche ( 2 ) pouvant sauter brusquement entre les deux positions, **caractérisée en ce que** la branche ( 2 ) peut être obtenue à partir d'une ébauche ( 5 ) en un matériau élastique, qui a deux ailes ( ( 6a, 6b ) en forme de V s'éloignant l'une de l'autre à partir d'un point ( 7 ) de liaison, les deux ailes ( 6a, 6b ) ayant un angle ( α ) d'ouverture prescrit l'une par rapport à l'autre et une courbure ( R ) prescrite et étant reliées entre elles à l'extrémité ( 8 ) ouverte, de manière à ce que les ailes ( 6a, 6b ) se trouvent sous une tension et sont forcées dans une position courbée hors du plan du V.

3. Branche ( 2 ) de lunettes suivant la revendication 1 ou 2, **caractérisée en ce que** la branche ( 2 ) est en métal, notamment en aluminium ou en tôle d'acier pour ressort, ayant de préférence une épaisseur de 0,2 à 0,5 mm.

4. Branche ( 2 ) de lunettes suivant la revendication 2 ou 3, lorsqu'elles dépendent de la revendication 2, **caractérisée en ce que** les ailes ( 6a, 6b ) de l'ébauche ( 5 ) ont un rayon ( R ) de courbure de plus de 400 mm.

5. Branche ( 2 ) de lunettes suivant l'une des revendications 2 ou 3 ou 4, lorsqu'elles dépendent de la revendication 2, **caractérisée en ce que** les ailes ( 6a, 6b ) de l'ébauche ( 5 ) ont un angle ( α ) d'ouverture compris entre 0 et 8°.

6. Branche ( 2 ) de lunettes suivant l'une des revendications 2 ou 3 à 5, lorsqu'elles dépendent de la revendication 2, **caractérisée en ce que** les branches ( 6a, 6b ) de l'ébauche ( 5 ) sont reliées à l'extrémité ( 8 ) ouverte en une articulation à charnière pour des lunettes ( 1 ).

7. Branche ( 2 ) de lunettes suivant l'une des revendications 1 à 6, **caractérisée en ce que** la branche ( 2 ) est revêtue d'une matière plastique souple, notamment de silicone ( 10 ).

8. Branche ( 2 ) de lunettes suivant l'une des revendications 1 à 7, **caractérisée en ce qu'**une matière plastique souple, notamment une silicone ( 10 ), est insérée entre les ailes ( 6a, 6b, 16a, 16b ).

9. Lunettes ( 1 ) dans lesquelles les lunettes ont une branche ( 2 ) suivant l'une des revendications 1 à 8.

10. Lunettes ( 1 ) suivant la revendication 9, dans lesquelles la première position de la branche correspond à une position dans laquelle les lunettes ( 1 ) sont portées et la deuxième position de la branche correspond à une position de rabattement des lunettes ( 1 ) et la courbure ( r ) de la branche ( 2 ) est à peu près égale à la courbure ( r' ) du cadre ( 4 ).
